## Europäisches Patentamt

## European Patent Office

## Office européen des brevets

(19)

(11) Veröffentlichungsnummer: **0 218 019**
**A1**

(12) # EUROPÄISCHE PATENTANMELDUNG

(21) Anmeldenummer: **86109722.8**

(22) Anmeldetag: **16.07.86**

(51) Int. Cl.⁴: **B 01 D 13/00**

(30) Priorität: **09.10.85 DE 3536007**

(43) Veröffentlichungstag der Anmeldung: **15.04.87**
**Patentblatt 87/16**

(84) Benannte Vertragsstaaten: **BE DE FR GB IT NL SE**

(71) Anmelder: **Akzo GmbH,**
**Postfach 10 01 49 Kasinostrasse 19-23,**
**D-5600 Wuppertal-1 (DE)**

(72) Erfinder: **Smolders, Cornelis A., D. Nijhoffstraat 15,**
**NL-7552 GP Hengelo (NL)**
Erfinder: **Franken, Antonius Ch. M., Beatrixstraat 72,**
**NL-7511 KM Enschede (NL)**
Erfinder: **Mulder, Marcellinus H.V., Spielehorst 11,**
**NL-7531 ER Enschede (NL)**

(54) **Pervaporationsverfahren.**

(57) Bei einem Pervaporationsverfahren zum Trennen von Flüssigkeits-, Dampf- oder Dampf/Gas-Gemischen, das mit einer aus einer porenfreien selektiv wirkenden Membranschicht (4a) und einer nicht benetzbaren durchgehende offene Poren aufweisenden Membranschicht (4b) bestehenden Zweischichtmembran durchgeführt wird, wird permeatseitig eine das dampfförmige Permeat aufnehmende Flüssigkeit, deren Komponenten einen niedrigeren Partialdruck erzeugen als die abzutrennende(n) Komponente(n) des zu trennenden Gemisches, mit der porösen Membranschicht (4b) in Berührung gebracht, ohne daß die das Permeat aufnehmende Flüssigkeit in die Poren der porösen Membranschicht (4b) eindringt. Bei diesem Verfahren sind die bei herkömmlichen Pervaporationsverfahren notwendigen Einrichtungen zum Erzeugen von Unterdruck auf der Permeatseite und zum Kondensieren des dampfförmigen Permeats bzw. die Verwendung von Schleppgas zum Austragen des dampfförmigen Permeats nicht mehr erforderlich. Darüber hinaus gestattet das Verfahren eine weitestgehende Wärmerückgewinnung aus dem Permeatkondensat.

ACTORUM AG

0218019

## Pervaporationsverfahren

### A k z o   GmbH

### Wuppertal

-.-.-.-.-

Die Erfindung betrifft ein Verfahren zum Trennen von Flüssigkeits-, Dampf- oder Dampf/Gas-Gemischen mit einer Zweischichtmembran bestehend aus einer porenfreien selektiv auf die abzutrennende(n) Gemischkomponente(n) wirkenden ersten Membranschicht und einer durchgehende offene Poren aufweisenden, porösen zweiten Membranschicht durch Pervaporation, bei welchem das zu trennende Gemisch mit der ersten Membranschicht in Berührung gebracht wird und das aus den Poren der zweiten Membranschicht austretende Permeat entfernt wird, sowie eine zum Durchführen dieses Verfahrens geeignete Vorrichtung.

Ein solches Verfahren ist bekannt aus: Journal of Membrane Science, 16 (1983) Seiten 269 bis 284, "Ethanol-Water Separation by Pervaporation" von M.H.V. Mulder, J. Oude Hendrikman, H. Hegeman und C.A. Smolders.

Bei diesem bekannten Verfahren wurde das aus den Poren der porösen Membranschicht austretende Permeat durch Erzeugen

0218019

von Unterdruck auf der Permeatseite mit Hilfe einer Vakuumpumpe dampfförmig abgezogen. Aus diesem Grund und weil dort die poröse Membranschicht lediglich eine Stützfunktion für die selektiv wirkende porenfreie Membranschicht übernahm, brauchten dort an die poröse zweite Membranschicht hinsichtlich Benetzbarkeit auch keine besonderen Anforderungen gestellt zu werden, so daß bei diesem bekannten Verfahren hydrophobe und hydrophile Werkstoffe wie PVDF und Nylon 6 mit gleich gutem Erfolg eingesetzt werden konnten.

Bekanntlich ist die Pervaporation ein Membrantrennverfahren, bei dem das treibende Gefälle für die permeierenden Komponenten durch Absenken des Partialdruckes auf der Permeatseite und Aufrechterhalten des niedrigeren Partialdruckes erzeugt wird. Das Trennprinzip beruht hierbei auf einer unterschiedlichen Löslichkeit und den unterschiedlichen Diffusionsgeschwindigkeiten der zu trennenden Stoffe, also der Gemischkomponenten, in der Membran, also auf einer unterschiedlichen Permealität der Membran für die permeierenden Komponenten und damit auf einer Verschiebung des Partialdampfdruckgleichgewichtes. Die für die Pervaporation geeigneten Membranen müssen also eine gute Löslichkeit (Sorptionsfähigkeit) für die bevorzugt permeierende(n) Komponente(n) aufweisen. D.h. sie müssen auf wenigstens eine Gemischkomponente selektiv wirken.

Nach der herrschenden Lehrmeinung wird das Absenken des Partialdruckes auf der Permeatseite entweder durch Anlegen von Vakuum auf der Permeatseite oder durch Austragen des Permeats mittels eines Trägergases erreicht, so daß die permeierenden Komponenten permeatseitig an der Oberfläche der porenfreien Membran in den dampfförmigen Zustand übergehen, da permeatseitig der Partialdruck der permeierenden Komponenten kleiner ist als der Sättigungsdampfdruck;
so beispielsweise auch Robert Rautenbach und Rainer
Albrecht in Chem.-Ing.-Tech. 57 (1985) Nr. 2, Seiten
119 - 130, "Pervaporation und Gaspermeation - Grundlagen
der Prozeßentwicklung" und Heiner Strathmann und Horst
Chmiel in Chem.-Ing.-Tech. 57 (1985) Nr. 7, Seiten 581 -
596, "Membranen in der Verfahrenstechnik".

Diese bei der Pervaporation bisher ausschließlich angewandte Fahrweise ist technisch sehr aufwendig, wobei zudem
eine auch nur teilweise Rückgewinnung der für die Pervaporation erforderlichen Verdampfungswärme aufgrund des im
Kondensator erforderlichen niedrigeren Temperaturniveaus
in der Regel nicht möglich ist. Auch muß bei Vakuumbetrieb,
beispielsweise, permeatseitig ein geringer Druckverlust
gefordert werden, da das Trennverfahren sehr empfindlich
auf Druckverluste reagiert, was nur durch permeatseitig
große Strömungsquerschnitte erreicht werden kann. Der
Vakuumbetrieb von Anlagen ist zudem immer als kritisch
anzusehen, da große Apparatevolumina benötigt werden,
Dichtigkeitsprobleme auftreten bzw. Sauerstoffdiffusion
in die Apparate auftreten kann, was zu Oxidationsprozessen
führt, Aggregate zur Erzeugung des Vakuums notwendig
sind usw. Bei der konventionellen Pervaporation mit Vakuum auf der Permeatseite herrscht im gesamten Permeatraum eine Dampfphase vor, deren Druck- und Temperaturbedingungen der niedrigsten Temperatur auf der Gemisch- bzw.
Permeatseite angepaßt sein muß. Das bedeutet aber, daß
die Temperaturen des Permeatdampfes auf einem so niedrigen Energieniveau sind, daß eine Wärmerückgewinnung nicht möglich ist.

Dieser Umstand ist ein wesentlicher Grund dafür, daß der technische Einsatz der Pervaporation bisher allenfalls nur auf Sonderfälle beschränkt stattgefunden hat.

Der vorliegenden Erfindung liegt daher die Aufgabe zugrunde, ein Pervaporationsverfahren zur Verfügung zu stellen, das entgegen der herrschenden Lehrmeinung ohne Vakuum oder oder Trägergas (Schleppgas) arbeitet, also einen geringeren technischen Aufwand erfordert und sich somit durch eine einfache Verfahrensführung auszeichnet, und das eine weitestgehende Wärmeenergierückgewinnung aus dem Permeatkondensat gestattet.

Diese Aufgabe wird bei dem gattungsgemäßen Verfahren dadurch gelöst, daß erfindungsgemäß eine das dampfförmige Permeat aufnehmende Flüssigkeit, in welcher die durch die Membran permeierenden Komponenten des zu trennenden Gemisches in einer niedrigeren Konzentration vorliegen als in dem zu trennenden Gemisch und/oder welche eine um so viel niedrigere Temperatur als das zu trennende Gemisch aufweist, daß die Komponenten dieser Flüssigkeit einen niedrigeren Partialdruck erzeugen als die permeierenden Komponenten in dem zu trennenden Gemisch, mit der zweiten Membranschicht in Berührung gebracht wird, wobei die zweite Membranschicht und die das Permeat aufnehmende Flüssigkeit so aufeinander abgestimmt sind, daß die zweite Membranschicht von der Flüssigkeit nicht benetzt wird, und daß der hydrostatische Druck in der das Permeat aufnehmenden Flüssigkeit so niedrig gehalten wird, daß diese nicht in die Poren der zweiten Membranschicht eindringt.

Beim erfindungsgemäßen Verfahren erfolgt der Stofftransport
durch die porenfreie selektiv wirkende erste Membranschicht
in derselben Weise wie bei dem herkömmlichen Pervaporationsverfahren. Das Permeat verläßt die erste Membranschicht auch beim erfindungsgemäßen Verfahren dampfförmig,
strömt (diffundiert) in diesem Zustand ebenfalls durch die
Poren der porösen zweiten Membranschicht, kondensiert dann
aber in die die Porenöffnungen bedeckende Flüssigkeit.

Die das Permeat aufnehmende Flüssigkeit kann ruhen,
wobei es dann rasch zu einem Ausgleich zwischen den Partialdrücken des Gemisches und denen des Permeats kommt.
Dieser Ausgleich kann durch Kühlen der das Permeat aufnehmenden Flüssigkeit hinausgezögert werden. Wesentlich
vorteilhafter ist es deshalb, die das Permeat aufnehmende
Flüssigkeit in Strömung zu versetzen und insbesondere an
der porösen zweiten Membranschicht entlangströmen zu
lassen. Vorzugsweise wird auch das zu trennende Gemisch
entlang der ersten Membranschicht in Strömung versetzt,
wobei das Gemisch und die das Permeat aufnehmende Flüssigkeit im Gleich- oder Kreuzstrom, vorzugsweise aber im
Gegenstrom zueinander geführt werden. Die Gegenstrom-
Fahrweise führt nämlich zu den besten Trenneffekten und
gestattet eine weitestgehende Wärmerückgewinnung mit relativ
geringem technischem Aufwand.

Vorzugsweise wird als permeataufnehmende Flüssigkeit eine
Flüssigkeit mit der gleichen oder zumindest annähernd der
gleichen Zusammensetzung verwendet, die auch das Permeat
aufweist. Die Zusammensetzung des Permeats kann auf einfache Weise mit einer Laborapparatur ermittelt werden, indem permeatseitig Vakuum angelegt und der durch die Membran hindurchtretende Permeatdampf kondensiert und analysiert wird.

Die von den Komponenten des zu trennenden Gemisches bzw. von der das Permeat aufnehmenden Flüssigkeit erzeugten Partialdrücke können experimentell nach den hierfür üblichen bekannten Bestimmungsmethoden oder aber auch rechnerisch, beispielsweise nach dem Raoult'schen Gesetz, bestimmt werden.

Wird als permeataufnehmende Flüssigkeit eine in ihrer Zusammensetzung dem Permeat entsprechende Flüssigkeit verwendet, so muß das für die Pervaporation erforderliche Partialdruckgefälle durch ein entsprechendes Temperaturgefälle erzeugt werden, d.h. die Temperatur auf der Permeatseite muß dann niedriger eingestellt und gehalten werden als auf der Gemischseite.

Bekanntlich hängt es von der Oberflächenspannung eines Festkörpers und einer Flüssigkeit ab, ob die Festkörperoberfläche, die mit der Flüssigkeit in Kontakt steht, von dieser benetzt wird oder nicht. Die Oberflächenspannung kann beispielsweise indirekt durch die Messung des Randwinkels, auch Kontaktwinkel genannt, bestimmt werden, der an der Begrenzungslinie eines auf dem Festkörper liegenden Flüssigkeitstropfens ausgebildet wird. Eine Festkörperoberfläche wird dann als von einer Flüssigkeit benetzbar bezeichnet, wenn dieser Randwinkel kleiner als 90° ist, und als nicht benetzbar, wenn der Randwinkel größer als 90° ist. Bestimmungsmethoden des Randwinkels sind bekannt und brauchen daher hier nicht näher erläutert zu werden.

Bei einem porösen Körper mit nach außen offenen Poren führt die Benetzbarkeit durch eine Flüssigkeit in der Regel zum Eindringen der Flüssigkeit in die Poren. Dies kann beispielsweise dadurch nachgewiesen werden, daß ein auf die Oberfläche eines benetzbaren porösen Körpers aufgebrachter Tropfen in der Regel spontan verschwindet, wenn er von den Poren gänzlich aufgenommen wird, zumindest aber sein Volumen bei nur teilweiser Aufnahme in die Poren verringert. Eine andere Nachweismethode besteht darin, einen porösen Körper in die betreffende Flüssigkeit einzutauchen und das Gewicht des porösen Körpers und/oder der Flüssigkeit vor und nach dem Eintauchen zu bestimmen. Eine benetzende Flüssigkeit nämlich dringt in die Poren des porösen Körpers ein, was zu einer Gewichtszunahme desselben und zu einer Gewichtsabnahme der Flüssigkeit führt.

Bekanntlich können aber auch Flüssigkeiten, die einen porösen Körper nicht benetzen, gewaltsam, d.h. unter Druckanwendung, in die Poren desselben und gegebenenfalls durch diese hindurch gedrückt werden. Je größer eine Pore ist, desto kleiner ist der für das Eindringen einer bestimmten Flüssigkeit erforderliche Druck. Dieser Druck wird häufig auch als Flüssigkeitseindringdruck bezeichnet. Die Ermittlung des für das Eindringen der das permeataufnehmenden Flüssigkeit in die Poren der porösen zweiten Membranschicht erforderlichen Flüssigkeitseindringdruckes kann beispielsweise in einem Laborversuch bestimmt werden, indem eine Probe der

das permeataufnehmenden Flüssigkeit oberhalb einer Probe der porösen zweiten Membranschicht aufgebracht und der Druck in der Flüssigkeit solange erhöht wird, bis Flüssigkeit auf der Unterseite der Membran austritt.

Da ein Eindringen der das permeataufnehmenden Flüssigkeit beim erfindungsgemäßen Pervaporationsverfahren jedoch vermieden werden muß, muß der hydrostatische Druck in der permeataufnehmenden Flüssigkeit so bemessen werden, daß an keiner Stelle der zweiten Membranschicht der Flüssigkeitseindringdruck erreicht wird.

Die Auswahl eines für die erste Membranschicht geeigneten Werkstoffes richtet sich nach denselben Kriterien, nach denen Pervaporationsmembranen für herkömmliche Pervaporationsverfahren ausgewählt werden, also beispielsweise nach der Zusammensetzung des zu trennenden Flüssigkeitsgemisches, nach der abzutrennenden Gemischkomponente, dem gewünschten Trennfaktor (auch Selektivitätsfaktor genannt), dem gewünschten transmembranen Permeatfluß usw. Porenfreie Membranen werden häufig auch als homogene oder dichte Membranen bezeichnet.

Die Auswahlkriterien für die zweite Membranschicht, insbesondere die Nichtbenetzbarkeit durch die das Permeat aufnehmende Flüssigkeit, ergeben sich aus den Ausführungen zur Benetzbarkeit usw. entsprechend (siehe oben).

Ein Herstellungsverfahren für eine geeignete Zweischichtmembran (auch Verbund- oder Kompositmembran genannt) ist in dem eingangs zitierten Aufsatz von Mulder et al. beschrieben.

Die poröse zweite Membranschicht kann darüber hinaus aus einem metallischen oder keramischen Werkstoff, aus Glas oder einer Kombination daraus bestehen und beispielsweise in Form von sogenannten Sinterwerkstoffen vorliegen; bevorzugt werden jedoch Kunststoffe, insbesondere vollsynthetische Polymere, wobei die erforderliche Nichtbenetzbarkeit der genannten Werkstoffe gegebenenfalls durch eine besondere Behandlung herbeigeführt werden muß. Hierfür geeignete Verfahren sind bekannt.

Besonders gute Ergebnisse wurden mit einer Zweischichtmembran erreicht, bei der die porenfreie selektiv wirkende erste Membranschicht aus Celluloseacetat oder Polyvinylalkohol und die durchgehende Poren aufweisende, poröse zweite Membranschicht aus einem Werkstoff bestand, wie er aus der deutschen Patentschrift 27 37 745, der deutschen Patentschrift 28 33 493, der deutschen Offenlegungsschrift 28 33 623 bzw. der deutschen Offenlegungsschrift 30 49 557 bekannt ist.

Auch sogenannte asymmetrische Membranen sind geeignet, sofern sie die übrigen genannten Voraussetzungen erfüllen.

Die Zweischichtmembran kann an sich in jeder für Membranen dieser Art gebräuchlichen Form vorliegen. Für das erfindungsgemäße Verfahren werden als Zweischichtmembran jedoch besonders Flachmembranen und ganz besonders rohr- und hohlfadenförmige Membranen, bei denen die porenfreie selektiv wirkende Membranschicht außenliegend angeordnet ist, bevorzugt.

Das erfindungsgemäße Verfahren weist gegenüber den herkömmliche Pervaporationsverfahren u.a. folgende Vorteile auf:

- Der apparative Aufwand ist wesentlich geringer, da das erfindungsgemäße Verfahren ohne die sonst üblichen Einrichtungen zur Vakuumerzeugung oder Schleppgaszirkulation und zur Kondensation des dampfförmigen Permeats und ohne die das Schleppgas bzw. das dampfförmige Permeat aufnehmenden Kammern und den genannten Einrichtungen zuführenden Rohrleitungen durchgeführt werden kann.

- Aufgrund der einfacheren Apparatur ergibt sich auch eine vereinfachte Verfahrensführung.

- Es findet keine Quervermischung des Permeats in der Dampfphase im unmittelbaren Bereich der ersten Membranschicht statt. Dadurch kann zusätzlich zu dem treibenden Gefälle über die Membran noch das sich ausbildende Partialdruck- und Temperaturprofil entlang der Membran zur Trennung ausgenutzt werden.

- Die poröse zweite Membranschicht wirkt auch als Wärmeisolierschicht, so daß für die Wahl der Temperaturen auf der Gemischseite und der Permeatseite ein größerer Spielraum besteht.

- Es ist auch eine Fahrweise möglich, bei der auf der Permeatseite ein höherer statischer Druck eingestellt wird als auf der Gemischseite.

- Bei richtiger Verfahrensführung ist die Rückgewinnung des größten Teils der in die das Permeat aufnehmende Flüssigkeit übertragenen Kondensationswärme möglich,

0218019

indem beispielsweise die das Permeat aufnehmende Flüssigkeit zum Vorheizen des zu trennenden Gemisches verwendet wird, was dadurch möglich ist, daß bei Gegenstromfahrweise die das Permeat wegführende Flüssigkeit eine höhere Temperatur erreichen kann als das an Permeat verarmte Gemisch.

- Der Trennprozeß ist beim erfindungsgemäßen Verfahren nicht mehr druckverlustanfällig.

- Die Diffusionswege für das dampfförmige Permeat sind sehr kurz, da sie ungefähr nur der Dicke der porösen, zweiten Membranschicht entsprechen.

Darüber hinaus bietet das erfindungsgemäße Verfahren auch diejenigen Vorteile, die mit herkömmlichen Pervaporationsverfahren erzielt werden, also beispielsweise die Möglichkeit, azetrope Gemische zu trennen oder das Verfahren in Kombination mit anderen Trennverfahren, beispielsweise herkömmlichen Destillationsverfahren, einzusetzen (sog. Hybrid-Verfahren).

Ein typisches Einsatzgebiet für das erfindungsgemäße Verfahren ist das Entwässern von organischen Flüssigkeiten, in denen das Wasser gelöst ist und in einem geringeren Anteil vorliegt als die organische Flüssigkeit. Zur Vermeidung von Benetzung der porösen Membranschicht durch das Permeat ist hierbei eine stark wasserselektiv wirkende erste Membranschicht zu verwenden. Auch lassen sich hierbei Gemische aus organischen Flüssigkeiten trennen, indem beispielsweise in einer ersten Stufe als permeataufnehmende Flüssigkeit Wasser eingesetzt wird, sofern das organische Permeat mit Wasser mischbar ist, und in einer zweiten Stufe aus diesem in der ersten Stufe entstandenen Flüssigkeitsgemisch aus organischem Permeat und Wasser das Wasser abgetrennt wird, indem in dieser zweiten Stufe eine auf Wasser selektiv wirkende Membran und als permeataufnehmende Flüssigkeit ebenfalls wieder Wasser eingesetzt wird.

Häufig ist ein einmaliges Vorbeileiten des zu trennenden Gemisches an der ersten Membranschicht für die gewünschte Trenngüte bzw. den gewünschten Konzentrierungsgrad nicht ausreichend. In solchen Fällen können entweder mehrere Trennstufen hintereinander geschaltet werden oder kann das zu trennende Gemisch im Kreislauf geführt (rezirkuliert) und mehrmals mit der ersten Membranschicht in Berührung gebracht werden. Dasgleiche gilt für die das Permeat aufnehmende Flüssigkeit.

Die zum Durchführen des erfindungsgemäßen Verfahrens geeignete Vorrichtung besteht in ihrer einfachsten Ausführungsform aus einer Kammer für das zu trennende Gemisch (erste Kammer), einer Kammer für die permeataufnehmende Flüssigkeit (zweite Kammer) und eine die erste Kammer von der zweiten Kammer trennende Zweischichtmembran, deren porenfreie selektiv wirkende erste Membranschicht der ersten Kammer und deren poröse zweite Membranschicht der zweiten Kammer zugewandt ist. Darüber hinaus kann in der ersten und/oder in der zweiten Kammer wenigstens eine Rühreinrichtung, mit der das Flüssigkeitsgemisch bzw. die das Permeat aufnehmende Flüssigkeit in Strömung versetzt werden können, und/oder Heiz- bzw. Kühleinrichtungen zum Temperieren, Aufheizen bzw. Kühlen des zu trennenden Gemisches bzw. der das Permeat aufnehmenden Flüssigkeit angeordnet sein.

Eine Vorrichtung für kontinuierliche Fahrweise weist darüber hinaus eine erste Kammer mit wenigstens einem Ein- und Auslaß für das Gemisch, eine zweite Kammer mit wenigstens einem Ein- und Auslaß für die das Permeat aufnehmende und wegführende Flüssigkeit, Pumpen oder andere Fördereinrichtungen für das Gemisch und die permeataufnehmende Flüssigkeit sowie die erforderlichen Rohrleitungen und Meßgeräte auf.

Das erfindungsgemäße Verfahren eignet sich nicht nur zum Trennen von Flüssigkeitsgemischen, sondern auch zum Trennen von Dampfgemischen und Dampf/Gas-Gemischen.

Die Erfindung wird nun anhand der Zeichnung näher erläutert. In vereinfachter schematischer Darstellungsweise zeigt:

Fig. 1    eine Ausführungsform der erfindungsgemäßen Vorrichtung für diskontinuierliche Fahrweise,

Fig. 2    eine Ausführungsform der erfindungsgemäßen Vorrichtung für kontinuierliche Fahrweise,

Fig. 3    ein Verfahrensschema für zweistufige Fahrweise.

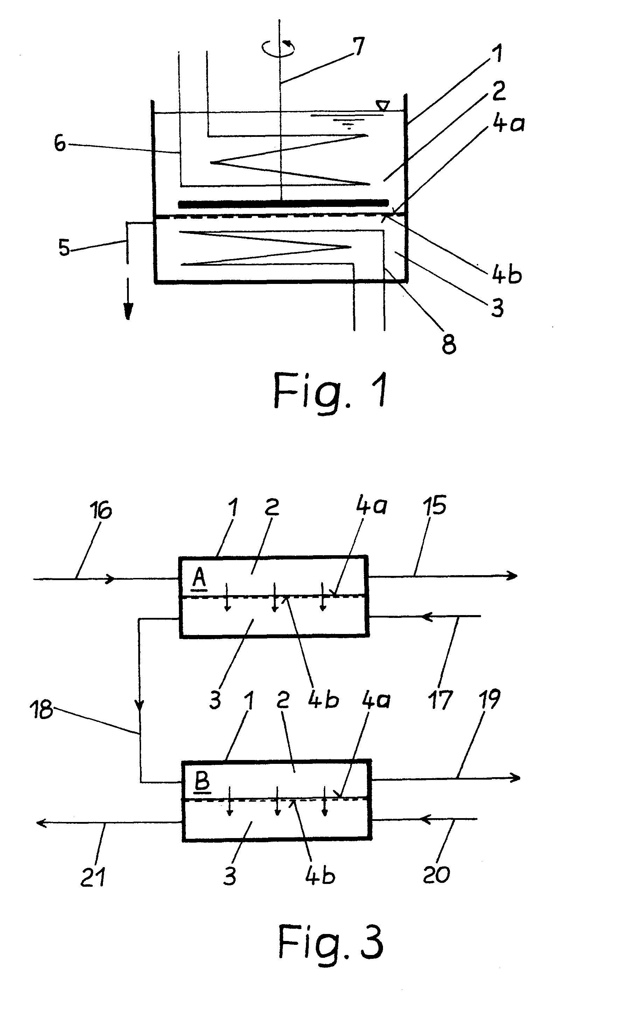

Die in Fig. 1 dargestellte Ausführungsform der erfindungsgemäßen Vorrichtung weist folgende Teile auf: Den Behälter 1, der durch eine aus der porenfreien selektiv wirkenden ersten Membranschicht 4a und der durchgehende Poren aufweisenden, porösen zweiten Membranschicht 4b bestehende Zweischichtmembran in die mit einem zu trennenden Flüssigkeitsgemisch gefüllte erste Kammer 2 und die mit einer das Permeat aufnehmenden Flüssigkeit gefüllte zweite Kammer 3 unterteilt ist. Die erste Membranschicht 4a steht in Kontakt mit dem zu trennenden Flüssigkeitsgemisch, die zweite Membranschicht 4b mit der das Permeat aufnehmenden Flüssigkeit. In der ersten Kammer 2 sind die Heizeinrichtung 6 und die Rühreinrichtung 7 angeordnet. In der zweiten Kammer 3 ist die Kühleinrichtung 8 angeordnet. Außerdem ist die zweite Kammer 3 mit dem Überlauf 5 ausgestattet, durch den aus der Kammer 3 die Flüssigkeitsmenge entweichen kann, die der durch die Zweischichtmembran 4a, 4b hindurchtretenden Permeatmenge entspricht. Durch Einstellen einer ausreichenden Temperaturdifferenz zwischen dem zu trennenden Flüssigkeitsgemisch in der ersten Kammer 2 und der das Permeat aufnehmenden Flüssigkeit in der zweiten Kammer 3 mit Hilfe der Heizeinrichtung 6 und der Kühleinrichtung 8 und die dadurch bewirkten Partialdruckdifferenzen zwischen den beiden genannten Flüssigkeiten, wird erreicht, daß aufgrund der selektiven Eigenschaften der ersten Membranschicht 4a zumindest eine Komponente des zu trennenden Flüssigkeitsgemisches bevorzugt durch die Zweischichtmembran 4a, 4b in die das Permeat aufnehmende Flüssigkeit in der zweiten Kammer 3 permeiert, wobei sich das Permeat nur noch in den Poren der zweiten Membranschicht 4b im dampfförmigen Zustand befindet. Durch die Rühreinrichtung 7 kann ein störendes Konzentrationsgefälle (Polarisation) in dem zu trennenden Flüssigkeitsgemisch verhindert werden. Die durch das Kondensieren des dampfförmigen Permeats in die das Permeat aufnehmende Flüssigkeit übertragene Wärmemenge kann mit Hilfe der Kühleinrichtung 8 abgeführt werden, so daß die gewünschte bzw. erforderliche Temperaturdifferenz so lange aufrechterhalten werden kann, bis der gewünschte Trenneffekt erreicht ist oder bis die Partialdruckdifferenz durch Abreicherung (Verarmung) der permeierenden Komponente in dem zu trennenden Flüssigkeitsgemisch und Anreicherung derselben in der das Permeat aufnehmenden Flüssigkeit soweit ausgeglichen ist, daß eine Trennung kaum oder überhaupt nicht mehr erfolgt.

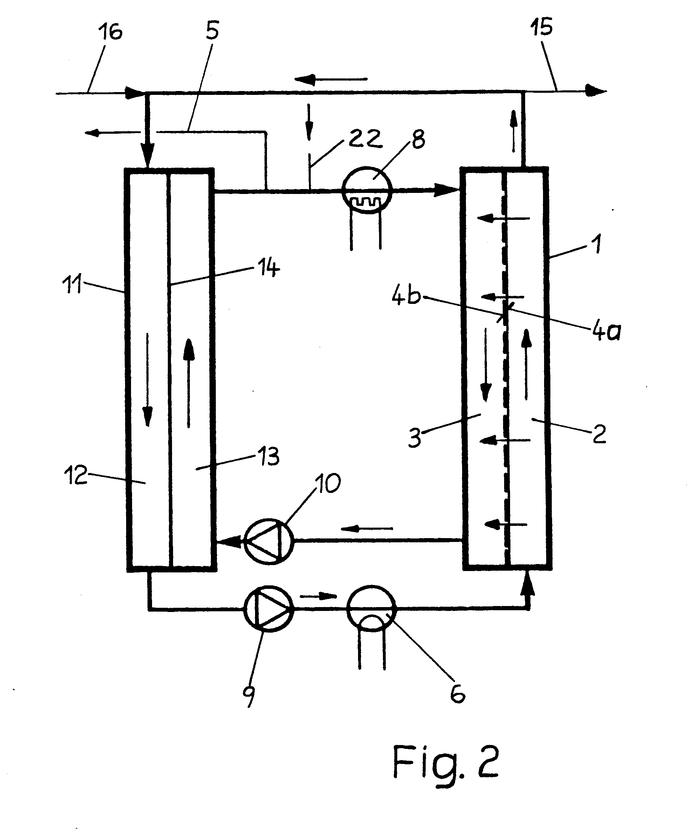

Die in Fig. 2 dargestellte Ausführungsform der erfindungsgemäßen Vorrichtung weist folgende Teile auf: Den Behälter 1, der durch die Zweischichtmembran 4a, 4b in die erste Kammer 2 für das zu trennende Gemisch und die zweite Kammer 3 für die das Permeat aufnehmende Flüssigkeit unterteilt ist, die Heizeinrichtung 6 und die Fördereinrichtung 9 für das zu trennende Gemisch, die Kühleinrichtung 8 und die Fördereinrichtung 10 für die das Permeat aufnehmende Flüssigkeit, den Wärmeaustauscher 11, der durch die wärmeübertragende Trennwand 14 in die erste Kammer 12 für das zu trennende Gemisch und die zweite Kammer 13 für die das Permeat aufnehmende Flüssigkeit unterteilt ist, sowie die die genannten Teile in der aus der Figur 2 sich von selbst ergebenden Weise miteinander verbindenden Rohrleitungen. Diese Ausführungsform ist dazu geeignet, das zu trennende Gemisch und die das Permeat aufnehmende Flüssigkeit solange im Kreislauf zu führen, bis der gewünschte Trenngrad errreicht ist. Durch den Zulauf 16 kann dabei ständig frisches Gemisch zugeführt und aus dem Ablauf 15 eine entsprechende Menge an Permeat verarmtes Gemisch (Retentat, Konzentrat) abgeführt werden. Die Zulauf- und Ablaufmengen können dabei wesentlich geringer sein als die mit Hilfe der Fördereinrichtung 9 im Kreislauf umgewälzte Gemischmenge. Dasselbe gilt sinngemäß für den Kreislauf für die das Permeat aufnehmende Flüssigkeit. Aus der Überlaufleitung 5 wird aus dem zuletztgenannten Kreislauf ständig eine Flüssigkeitsmenge abgezogen, die der durch die Zweischichtmembran 4a, 4b hindurchtretenden Permeatmenge entspricht. Durch die Zulaufleitung 22 kann dem System frische Flüssigkeit zur Aufnahme des Permeats zugeführt werden. Dies kann z.B. dann erforderlich sein, wenn das anfallende Permeat zu einer Benetzung der porösen Membranschicht führen würde und daher ständig durch eine nichtbenetzende Flüssigkeit, z.B.Wasser, verdünnt und ausgetragen werden muß.

Bei der in Fig. 2 dargestellten Fahrweise, bei welcher das zu trennende Gemisch und die das Permeat aufnehmende Flüssigkeit sowohl im Pervaporator 1 als auch im Wärmeaustauscher 11 im Gegenstrom geführt werden, ist eine weitestgehende Wärmerückgewinnung der im Pervaporator 1 in die das Permeat aufnehmende Flüssigkeit übertragenen Wärmemenge mit Hilfe des Wärmeaustauschers 11 möglich, so daß dem im Kreislauf geführten Gemisch nur noch die verbleibende Wärmeenergiedifferenz in der Heizeinrichtung 6 zugeführt und ein entsprechend niedriger Energiebetrag auch nur noch aus der das Permeat aufnehmenden Flüssigkeit in der Kühleinrichtung 8 abgeführt zu werden braucht.

Die Zweischichtmembran 4a, 4b und/oder die Trennwand 14 werden vorzugsweise aus Rohren oder Hohlfäden gebildet, die aus einem vollsynthetischen Polymeren bestehen. Die Anordnung solcher Rohre oder Hohlfäden kann eine solche sein, wie sie bei Rohrbündelwärmeaustauschern üblich ist, jedoch können auch andere Anordnungen von Fall zu Fall von Vorteil sein.

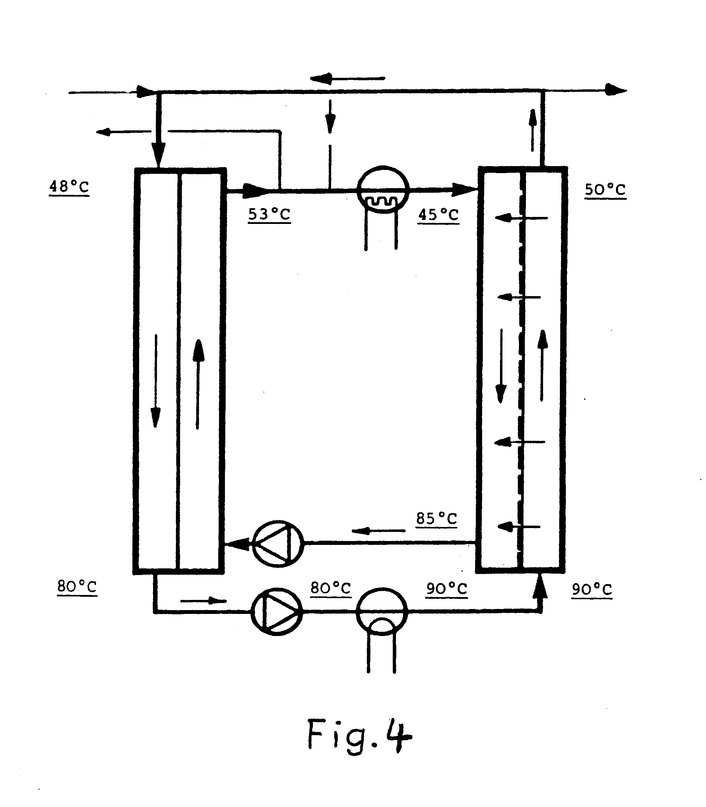

Die in Fig. 3 dargestellte erfindungsgemäße Vorrichtung weist einen ersten Pervaporator A und einen zweiten Pervaporator B auf, wobei die zweite Kammer 3 des ersten Pervaporators A durch die Rohrleitung 18 mit der ersten Kammer 2 des zweiten Pervaporators B verbunden ist. Die übrigen Teile der beiden Pervaporatoren A und B haben ihren Positionszahlen entsprechend die gleiche Bedeutung, wie sie bei der Beschreibung der Figuren 1 und 2 bereits erläutert wurde. Über die Zulaufleitung 16 kann der ersten Kammer 2 des ersten Pervaporators A beispielsweise ein aus organischen Komponenten bestehendes Flüssigkeits- oder Dampfgemisch zugeführt und das Retentat, also das an wenigstens einer organischen Gemischkomponente verarmte Gemisch, über die Ablaufleitung 15 aus der ersten Kammer 2 des ersten Pervaporators A abgezogen werden. Über die Zulaufleitung 17 kann eine das organische Permeat der ersten Verfahrensstufe aufnehmende Flüssigkeit, beispielsweise Wasser, der zweiten Kammer 3 des ersten Pervaporators A zugeführt werden. Das durch die Aufnahme des Permeats dabei entstehende Gemisch kann über die Verbindungsleitung 18 der ersten Kammer 2 des zweiten Pervaporators B nunmehr als zu trennendes Gemisch zugeführt und das dabei entstehende Retentat, z.B. das an permeataufnehmender Flüssigkeit der ersten Verfahrensstufe verarmte Gemisch, über die Ablaufleitung 19 aus der ersten Kammer 2 des zweiten Pervaporators B abgezogen werden. Der zweiten Kammer 3 des zweiten Pervaporators B kann über die Zulaufleitung 20 eine das im zweiten Pervaporator B entstehende Permeat aufnehmende Flüssigkeit, beispielsweise ebenfalls Wasser, zugeführt und über die Ablaufleitung 21, die mit Permeat angereicherte Flüssigkeit, beispielsweise im wesentlichen Wasser, aus der zweiten Kammer 3 des zweiten Pervaporators B abgeleitet werden. Während die erste Membranschicht 4a des ersten Pervaporators A also auf wenigstens eine der Komponenten des organischen Gemisches selektiv wirken muß, kann die erste Membranschicht 4a des zweiten Pervaporators B auch eine auf die das Permeat im ersten Pervaporator A aufnehmende Flüssigkeit, z.B. Wasser, selektiv wirkende Membranschicht sein. Jedoch ist auch der Einsatz einer auf wenigstens eine der im ersten Pervaporator A permeierten Komponenten selektiv wirkender ersten Membranschicht 4a im zweiten Pervaporator B möglich.

Auch bei dieser Vorrichtung ist eine Fahrweise mit Wärmerückgewinnung und Rezirkulation der am Verfahren beteiligten Gemische und Flüssigkeiten möglich.

Wasser als permeataufnehmende Flüssigkeit in beiden Pervaporatoren A und B kann zur Vermeidung der Benetzung der zweiten Membranschichten 4b notwendig sein.

0218019

Die in den Figuren 1 bis 3 eingezeichneten Pfeile geben die Richtung der verschiedenen in der Beschreibung erläuterten Stoffströme an.

Beispiel 1

Zum Herstellen einer für das erfindungsgemäße Verfahren geeigneten Zweischichtmembran wurde zunächst eine Polymerlösung bestehend aus 15 Gew.-% Celluloseacetat (Eastman CA 398-3-5) und 85 Gew.-% Aceton hergestellt. Diese Lösung wurde auf einer Glasplatte ausgebreitet und das Lösungsmittel anschließend in einer Stickstoffatmosphäre zum Verdampfen gebracht. Dabei entstand eine transparente homogene Membran mit einer Dicke von ca. 10 μm. Diese Celluloseacetatmembran wurde mit einer hydrophoben mikroporösen 160 μm dicken Polypropylenmembran (Accurel[R] der Firma Enka AG) zu einer Zweischichtmembran zusammengefügt. Diese Zweischichtmembran wurde zum Trennen eines Äthanol-Wasser-Gemisches verwendet, bei dem die Mischungskomponenten Äthanol und Wasser im Gewichtsverhältnis 1 : 1 vorlagen. Als permeataufnehmende Flüssigkeit wurde ein dem Permeat entsprechendes Flüssigkeitsgemisch, dessen Zusammensetzung zuvor in einer Vakuumapparatur ermittelt worden war, verwendet. Die Temperatur des zu trennenden Gemisches wurde auf 45°C, die der das Permeat aufnehmenden Flüssigkeit auf 25°C eingestellt und gehalten. Das auf diese Weise erhaltene Permeat hatte einen Gewichtsanteil von 80% Wasser und 20% Äthanol, was einen Selektivitätsfaktor von 4 entspricht, wobei der Permeatfluß durch die Zweischichtmembran 0,6 l/m²·h betrug.

Beispiel 2

Aus 10 Gew.-% Celluloseacetat (wie unter Beispiel 1) und 90 Gew.-% DMSO wurde eine Polymerlösung und mit dieser eine Zweischichtmembran hergestellt, indem die Polymerlösung auf eine 160 µm dicke poröse Membran (wie unter Beispiel 1 beschrieben) ausgebreitet und das Lösungsmittel in einer Stickstoffatmosphäre zum Verdampfen gebracht wurde. Die Dicke der auf diese Weise geformten porenfreien selektiv wirkenden ersten Membranschicht betrug ungefähr 5 µm. Mit einem Flüssigkeitsgemisch wie unter Beispiel 1 beschrieben wurde bei einer Gemischtemperatur von 44°C und einer Temperatur auf der Permeatseite von 27°C wiederum ein Selektivitätsfaktor von 4, jedoch ein Permeatfluß von 1,1 l/m² · h erreicht.

Beispiel 3

Eine Polymerlösung, bestehend aus 25 Gew.-% Polysulfon (Union Carbide P3500) und 75 Gew.-% Dimethylacetamid wurde auf einer Glasplatte ausgebreitet und anschließend in ein Isopropanolbad getaucht. Auf diese Weise wurde eine asymmetrische Polysulfonmembran mit einer porenfreien und einer porösen Schicht erhalten. Diese Membran wurde mit ihrer porenfreien Schicht außenliegend als erste Membranschicht mit einer porösen Membran, wie unter Beispiel 1 und 2 beschrieben, als zweiten Membranschicht zu einer Zweischichtmembran zusammengefügt. Mit einem Flüssigkeitsgemisch, wie unter Beispiel 1 und 2 beschrieben, wurde bei einer Gemischtemperatur von 37,5°C und einer Temperatur von 21°C auf einer Permeatseite ein Trennfaktor von 10 und ein Permeatfluß von 0,015 l/m · h erhalten.

Mit dem erfindungsgemäßen Verfahren können jedoch auch andere Gemische erfolgreich getrennt werden, insbesondere solche, die auch mit herkömmlichen Pervaporationsverfahren trennbar sind, solange dafür Sorge getragen wird, daß die poröse zweite Membranschicht von der das Permeat aufnehmenden Flüssigkeit nicht benetzt wird.

Zum Herstellen der für das erfindungsgemäße Verfahren geeigneten Zweischichtmembran können auch andere Verfahren als die in den Beispielen geschilderten zur Anwendung kommen, wie beispielsweise Eintauchbeschichtung, Sprühbeschichtung, Plasmapolymerisation, Oberflächenpolymerisation, In-Situ-Polymerisation usw.

So wurde eine rohrförmige Zweischichtmembran mit außenliegender porenfreier erster Membranschicht dadurch erhalten, daß eine auf 2,5 Gew.-% verdünnte Polymerlösung, wie in Beispiel 1 beschrieben, auf ein Rohr aus einem porösen Werkstoff, wie in Beispiel 1 beschrieben, aufgespritzt wurde und das Lösungsmittel durch die Poren in das Rohrinnere zum Verdampfen gebracht wurde. Dieses Verfahren läßt sich auch maschinell durchführen, indem das Rohr beispielsweise wie auf einer Drehbank eingespannt und in Drehung versetzt wird und die Sprüheinrichtung zum Aufsprühen der Polymerlösung wie das Werkzeug auf einer Drehbank, jedoch in einem bestimmten gleichbleibenden Abstand von der Rohroberfläche mit einem bestimmten Vorschub an dem in Drehung versetzten Rohr entlanggeführt wird. Auf diese Weise läßt sich eine sehr gleichmäßige porenfreie erste Membranschicht beliebiger Dicke auf das als zweite Membranschicht dienende Rohr aus einem porösen Werkstoff aufbringen. Auf dieselbe Weise läßt sich auch eine flache Zweischichtmembran herstellen, indem die poröse zweite Membranschicht um ein Trägerrohr gewickelt und die erste Membranschicht dann wie oben beschrieben aufgesprüht wird.

0218019

## Beispiel 4 (siehe Figur 4)

Die Vorrichtung entspricht der nach Figur 2 (siehe dort), wobei hier die Temperaturen für eine vorteilhafte Fahrweise eingetragen sind.

Die Temperatur des an Permeat verarmten Gemisches liegt hier beim Verlassen des Pervaporators niedriger als die der den Pervaporator verlassenden permeatwegführenden Flüssigkeit (50°C gegenüber 85°C), so daß 80% der im Pervaporator in die permeataufnehmende Flüssigkeit übertragenen Wärmemenge im Wärmeaustauscher wieder in das Gemisch zurückübertragen werden kann und nur die verbleibende Differenz als äußere Wärmeenergie dem Gemisch zugeführt zu werden braucht.

0218019

In den Figuren haben folgende Positionszahlen folgende Bedeutung:

| Positions-zahl | Bezeichnung |
| --- | --- |
| 1 | Behälter; Pervaporator |
| 2 | Erste Kammer (zur Aufnahme des zu trennenden Gemisches) |
| 3 | Zweite Kammer (zur Aufnahme der das Permeat aufnehmenden Flüssigkeit) |
| 4a | Porenfreie selektiv wirkende erste Membranschicht der Zweischichtmembran |
| 4b | Nichtbenetzbare durchgehende offene Poren aufweisende, poröse zweite Membranschicht der Zweischichtmembran |
| 5 | Überlaufleitung; Entnahmeleitung (für die mit Permeat angereicherte Flüssigkeit) |
| 6 | Heizeinrichtung(für das zu trennende Gemisch) |
| 7 | Rühreinrichtung(für das zu trennende Gemisch) |
| 8 | Kühleinrichtung(für die permeataufnehmende Flüssigkeit) |
| 9 | Fördereinrichtung; Pumpe(für das zu trennende Gemisch) |
| 10 | Fördereinrichtung; Pumpe (für die permeataufnehmende Flüssigkeit) |
| 11 | Wärmeaustauscher |
| 12 | Erste Kammer des Wärmeaustauschers 11 |
| 13 | Zweite Kammer des Wärmeaustauschers 11 |
| 14 | Wärmeübertragende Trennwand des Wärmeaustauschers 11 |
| 15 | Ablaufleitung (für das an Permeat verarmte Gemisch) |
| 16 | Zulaufleitung(für das zu trennende Gemisch) |
| 17 | Zulaufleitung(für die das Permeat aufnehmende Flüssigkeit zum ersten Pervaporator A) |
| 18 | Verbindungsleitung zwischen dem ersten Pervaporator A und dem zweiten Pervaporator B |

| Positions-<br>zahl | Bezeichnung |
|---|---|
| 19 | Ablaufleitung (für das an Permeat verarmte Gemisch aus dem zweiten Pervaporator B) |
| 20 | Zulaufleitung (für die das Permeat auf-nehmende Flüssigkeit zum zweiten Pervapo-rator B) |
| 21 | Ablaufleitung (für die mit Permeat angereicherte Flüssigkeit aus dem zweiten Pervaporator B) |
| 22 | Zulaufleitung für permeataufnehmende Flüssigkeit |

Patentansprüche

1. Verfahren zum Trennen von Flüssigkeits-, Dampf- oder Dampf/Gas-Gemischen mit einer Zweischichtmembran bestehend aus einer porenfreien selektiv auf die abzutrennende(n) Gemischkomponente(n) wirkenden ersten Membranschicht und einer durchgehende offene Poren aufweisenden, porösen zweiten Membranschicht durch Pervaporation, bei welchem das zu trennende Gemisch mit der ersten Membranschicht in Berührung gebracht wird und das aus den Poren der zweiten Membranschicht austretende Permeat entfernt wird, dadurch gekennzeichnet, daß eine das dampfförmige Permeat aufnehmende Flüssigkeit, in welcher die durch die Membran permeierenden Komponenten des zu trennenden Gemisches in einer niedrigeren Konzentration vorliegen als in dem zu trennenden Gemisch und/oder welche eine um so viel niedrigere Temperatur als das zu trennende Gemisch aufweist, daß die Komponenten dieser Flüssigkeit einen niedrigeren Partialdruck erzeugen als die permeierenden Komponenten in dem zu trennenden Gemisch, mit der zweiten Membranschicht in Berührung gebracht wird, wobei die zweite Membranschicht und die das Permeat aufnehmende Flüssigkeit so aufeinander abgestimmt sind, daß die zweite Membranschicht von der Flüssigkeit nicht benetzt wird, und daß der hydrostatische Druck in der das Permeat aufnehmenden Flüssigkeit so niedrig gehalten wird, daß diese nicht in die Poren der zweiten Membranschicht eindringt.

0218019

2. Verfahren nach Anspruch 1, dadurch gekennzeichnet, daß als permeataufnehmende Flüssigkeit eine in ihrer Zusammensetzung dem Permeat zumindest annähernd entsprechende  Flüssigkeit verwendet wird.

3. Verfahren nach Anspruch 1 oder 2, gekennzeichnet durch die Verwendung einer in Form wenigstens eines Rohres oder eines Hohlfadens vorliegenden Zweischichtmembran.

4. Verfahren nach Anspruch 3, gekennzeichnet durch die Verwendung einer außenliegenden Polyvinylalkohol- oder Celluloseacetatschicht als erster Membranschicht

5. Verfahren nach einem der Ansprüche 1 bis 4, dadurch gekennzeichnet, daß das zu trennende Gemisch und/oder die das Permeat aufnehmende Flüssigkeit in Strömung versetzt wird.

6. Verfahren nach einem der Ansprüche 1 bis 5, dadurch gekennzeichnet, daß das zu trennende Gemisch und/oder die das Permeat aufnehmende Flüssigkeit mehrmals  an der Zweischichtmembran entlanggeführt wird.

7. Verfahren nach Anspruch 6, dadurch gekennzeichnet, daß das Gemisch und die das Permeat aufnehmende Flüssigkeit im Gegenstrom zueinander geführt werden.

8. Verfahren nach einem der Ansprüche 1 bis 7, dadurch gekennzeichnet, daß die in die permeataufnehmende Flüssigkeit übertragene Wärmeenergie weitestgehend in das zu trennende Gemisch zurückgeführt wird.

9. Verfahren nach einem der Ansprüche 1 bis 8, dadurch gekennzeichnet, daß in einer ersten Verfahrensstufe zumindest eine Komponente des zu trennenden Gemisches abgetrennt wird und daß in einer zweiten, sich daran anschließenden, Verfahrensstufe die das Permeat in der ersten Verfahrensstufe aufnehmende Flüssigkeit abgetrennt wird.

10. Vorrichtung geeignet zum Durchführen des Verfahrens nach einem der Ansprüche 1 bis 9, bestehend aus einem Behälter, der durch eine aus einer porenfreien selektiv wirkenden ersten Membranschicht und einer durchgehende offene Poren aufweisenden, porösen zweiten Membranschicht bestehende Zweischichtmembran in eine erste Kammer für das zu trennende Gemisch und eine zweite Kammer für das Permeat unterteilt ist, sowie Einrichtungen zum Wegführen und Kondensieren des dampfförmigen Permeats, dadurch gekennzeichnet, daß die Einrichtung zum Wegführen des dampfförmigen Permeats die Poren der porösen zweiten Membranschicht (4b) und die Einrichtung zum Kondensieren des dampfförmigen Permeats die zweite Kammer (3) ist.

11. Vorrichtung nach Anspruch 11, gekennzeichnet durch wenigstens eine Flüssigkeitspumpe (10), die über eine Rohrleitung mit der zweiten Kammer (3) des Behälters (1) verbunden ist.

12. Vorrichtung nach Anspruch 10 oder 11, gekennzeichnet durch einen Wärmeaustauscher (11), dessen erste Kammer (12) mit der ersten Kammer (2) des Behälters (1) und dessen zweite Kammer (13) mit der zweiten Kammer (3) des Behälters (1) verbunden ist.

0218019

13. Vorrichtung nach einem der Ansprüche 10 bis 12, gekennzeichnet durch eine Fördereinrichtung (9) für das zu trennende Gemisch, die über eine Rohrleitung mit der ersten Kammer (2) des Behälters (1) verbunden ist.

14. Vorrichtung nach einem der Ansprüche 10 bis 13, gekennzeichnet durch einen vor der ersten Kammer (2) des Behälters (1) und/oder einen vor der zweiten Kammer (3) des Behälters (1) angeordneten Wärmeaustauscher (6;8).

15. Verwendung der Vorrichtung nach einem der Ansprüche 10 bis 14 zum Durchführen des Verfahrens nach einem der Ansprüche 1 bis 9.

0218019

1/3

Fig. 1

Fig. 3

Fig. 2

48°C

53°C    45°C    50°C

80°C    80°C    90°C    90°C

85°C

Fig.4

0218019

Nummer der Anmeldung

Europäisches
Patentamt

EUROPÄISCHER RECHERCHENBERICHT

EP 86 10 9722

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | GB-A-2 042 417 (INTERNATIONAL POWER TECHNOLGY INC.) <br><br> * Zusammenfassung; Figur 2; Ansprüche 1,2,12,14; Seite 2, Zeilen 76-85; Seite 3, Zeile 106 - Seite 4, Zeile 23; Seite 4, Zeilen 41-56; Seite 5, Zeile 116 - Seite 6, Zeile 60 * | 1,2,4-8,10,15 | B 01 D 13/00 |
| Y | | 3,11-14 | |
| Y | CHEMIE INGENIEUR TECHNIK, Band 56, Nr. 7, Juli 1984, Seiten 514-521, Verlag Chemie GmbH, Weinheim, DE; K. SCHNEIDER et al.: "Membrandestillation" * Zusammenfassung; Absätze 1,2,4,5; Figuren 1,7,10 * | 3,11-14 | |
| A | Idem | 1,2,5-8,10,15 | RECHERCHIERTE SACHGEBIETE (Int. Cl.4) <br><br> B 01 D |
| Y | EP-A-0 096 339 (GFT INGENIEURBÜRO FÜR INDUSTRIEANLAGENBAU) * Ansprüche 1,10; Seite 2, Zeilen 6-11 * | 1,4,5, 8-10, 13,15 | |

--- -/-

Der vorliegende Recherchenbericht wurde für alle Patentansprüche erstellt.

| Recherchenort | Abschlußdatum der Recherche | Prüfer |
|---|---|---|
| DEN HAAG | 19-12-1986 | HOORNAERT P.G.R.J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | CHEMIE INGENIEUR TECHNIK, Band 54, Nr. 3, März 1982, Seiten 260,261, Verlag Chemie GmbH, Weinheim, DE; R. RAUTENBACH et al.: "Die Trennung engsiedender und azeotroper Gemische durch Pervaporation" * Insgesamt * | 1,4,5, 8-10, 13,15 | |
| | --- | | |
| A | FR-A-1 568 139 (ABCOR INC.) <br><br> * Zusammenfassung, Punkte 1,2a,f,g; Seite 1, Spalte 1, Zeile 1 - Seite 2, Spalte 1, Zeile 22 * | 1,3,5, 7,9-11 ,13,15 | |
| | ----- | | |

RECHERCHIERTE SACHGEBIETE (Int. Cl.4)

Der vorliegende Recherchenbericht wurde für alle Patentansprüche erstellt.

| Recherchenort | Abschlußdatum der Recherche | Prüfer |
|---|---|---|
| DEN HAAG | 19-12-1986 | HOORNAERT P.G.R.J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82